# EUROPÄISCHE PATENTSCHRIFT

(11) **EP 0 473 841 B1**
(45) Veröffentlichungstag und Bekanntmachung des Hinweises auf die Patenterteilung: **10.11.1993**
(21) Anmeldenummer: 90125403.7
(22) Anmeldetag: 24.12.1990
(51) Int. Cl.: B67C 11/04, B01D 29/085

(54) **Einfülltrichter**
Filling funnel
Entonnoir de remplissage

(30) Priorität: 05.09.1990 EP 90117076
(43) Veröffentlichungstag der Anmeldung: 11.03.1992
(73) Patentinhaber: FIRMA ALFRED KUEHMICHEL, D-35799 Merenberg (DE)
(72) Erfinder: Kuehmichel, Manfred, W-6295 Allendorf-Weilburg (DE)
(74) Vertreter: Blumbach Weser Bergen Kramer

(56) Entgegenhaltungen:
- BE-A- 525 232
- FR-A- 444 086
- FR-A- 750 958
- US-A- 1 411 284
- US-A- 4 600 125

## Beschreibung

Die Erfindung bezieht sich auf einen Einfülltrichter nach dem Oberbegriff des Anspruches 1.

Ein oberbegrifflicher Einfülltrichter ist aus der BE-A-525 232 bekannt und dient zur Trennung von Kraftstoff und Wasser voneinander.

Es ist auch bereits ein Einfülltrichter mit einem Ventil im Auslauf bekannt (US-A-1 411 284), welches normalerweise geschlossen ist und über eine Betätigungsstange aufgestoßen werden kann. Die Betätigungsstange verläuft längs der Einfüllschale innerhalb einer Tasche, die zum Auslauf offen ist, weswegen die aufsteigende Flüssigkeit in diese Tasche hineingelangen kann. Der bekannte Einfülltrichter ist zur Handhabung gefährlicher Flüssigkeiten nicht vorgesehen.

Ein oberbegrifflicher Einfülltrichter ist aus der EP 0 318 633 A2 des Anmelders bekannt und dient zum Einfüllen von Abfallflüssigkeiten, insbesondere Altölen und Chemikalien, in einen faßartigen Entsorgungsbehälter. Die Schale kann zum bequemeren Einfüllen über den Rand des Fasses geschwenkt werden. Wenn ein Entsorgungsbehälter mit Abfallflüssigkeit befüllt wird, kann es mangels eines Füllstandsanzeigers vorkommen, daß die Flüssigkeit bis in den Einfülltrichter ansteigt.

Der Erfindung liegt die Aufgabe zugrunde, einen Einfülltrichter der eingangs angegebenen Art so zu gestalten, daß mit ihm gefahrloses Füllen von Behältern mit Flüssigkeit möglich wird, auch wenn die Flüssigkeit bis in den Einfülltrichter ansteigt und der Einfülltrichter anschließend entfernt wird.

Die gestellte Aufgabe wird aufgrund der im Kennzeichen angegebenen Maßnahmen gelöst.

Der Auslauf des Einfülltrichter umfaßt einen Auslaufstutzen mit Sperreinrichtung und die Sperreinrichtung einen Betätigungsgriff, der neben der Einfüllschale angeordnet ist. Mit der Sperreinrichtung läßt sich der Einfülltrichter am Auslauf verschließen und somit überflüssige Flüssigkeit mit dem Einfülltrichter als Gefäß wegschaffen. Die im Auslauf vorhandene Flüssigkeit kann noch in den Behälter eintreten, sei es, daß in diesem eine Luftblase entweichen kann, deren Raum dann die Flüssigkeit einnehmen kann, sei es, daß die aus dem Gefäß abgezogenen Wandteile des Einfülltrichters genügend Raum freimachen, um die im Auslauf befindliche Restflüssigkeit aufzunehmen.

Der Auslaufstutzen ist über einen Rohrabschnitt mit dem unteren Ende der Einfüllschale und über eine Entlüftungsleitung zweckmäßig mit dem oberen Rand der Einfüllschale verbunden. Der Gefahr von unbeabsichtigtem Austreten von Flüssigkeit über die Belüftungsöffnung wird dadurch begegnet. Der obere Abschnitt der Entlüftungsleitung ist zweckmäßig in einen Handgriff einbezogen. Dabei kann die Entlüftungsleitung als Füllstandsanzeiger ausgebildete durchsichtige Abschnitte aufweisen.

Die Sperreinrichtung kann als hohler Drehschieber mit seitlicher, zum Sperren wegschwenkbarer Zulauföffnung und axialer Ablauföffnung ausgebildet sein. Dabei wird zweckmäßig in das hohle Innere des Drehschiebers ein unterer Abschnitt der Entlüftungsleitung einbezogen, und dieser untere Abschnitt ist über eine seitliche, zum Sperren wegschwenkbare Verbindungsöffnung mit dem oberen Abschnitt der Entlüftungsleitung verbunden. Es stellt dies eine sehr einfache und kostengünstig zu erstellende Sperreinrichtung dar, die zweckmäßigerweise in Verbindung mit einer am Auslaufstutzen angebrachten Mutter verwendet wird, die dichtend mit der Öffnung des Behälters verbindbar ist. Auf diese Weise wird beim Befüllen des Behälters eine Luftblase erzeugt, die verhindert, daß weitere Flüssigkeit aus dem Einfülltrichter in den Behälter gelangt, wenn ein gewisser Füllstand im Behälter erzielt ist. Die in dem Einfülltrichter hochsteigende Flüssigkeit kann nach dessen Sperren gefahrlos entfernt werden, es ist aber auch möglich, durch Lockern der Mutter und damit Lockern der Abdichtwirkung den Inhalt des Einfülltrichters ganz oder teilweise auf Kosten der Luftblase in den Behälter abfließen zu lassen.

Alternativ kann die Sperreinrichtung auch als Schieberkolben oder als Sitzventil ausgebildet sein.

In der Entlüftungsleitung ist zweckmäßigerweise ein Ölsperrventil einbezogen, welches zwar Luft passieren läßt, nicht aber Öl. Dieses Ölsperrventil stellt gleichzeitig einen gewissen Explosionsschutz dar, weil die im Ölsperrventil vorhandene Kugel im Falle einer rasch bewegten Strömung gegen den zweiten Ventilsitz gepreßt wird und diesen somit verschließt. Das in der Einfüllschale angebrachte Sieb stellt einen weiteren Teil des Explosionsschutzes dar, da Flammen bekanntlich nicht durch metallische Siebe durchschlagen.

Schließlich kann der Einfülltrichter auch als Explosionsschutzvorrichtung gestaltet sein.

Weitere Einzelheiten der Erfindung werden anhand der verschiedenen Ausführungsformen erläutert. In der Zeichnung zeigt:
- Fig. 1: einen axialen Längsschnitt durch einen Einfülltrichter mit Verschließeinrichtung,
- Fig. 2: eine Ansicht von oben auf den Einfülltrichter,
- Fig. 3: einen Schieberkolben als Verschließeinrichtung,
- Fig. 4: ein Sitzventil als Verschließeinrichtung,
- Fig. 5: eine variierte Einzelheit aus Fig. 4 und
- Fig. 6: einen weiteren axialen Längsschnitt durch eine weitere Ausführungsform des Einfülltrichters mit Verschließeinrichtung.

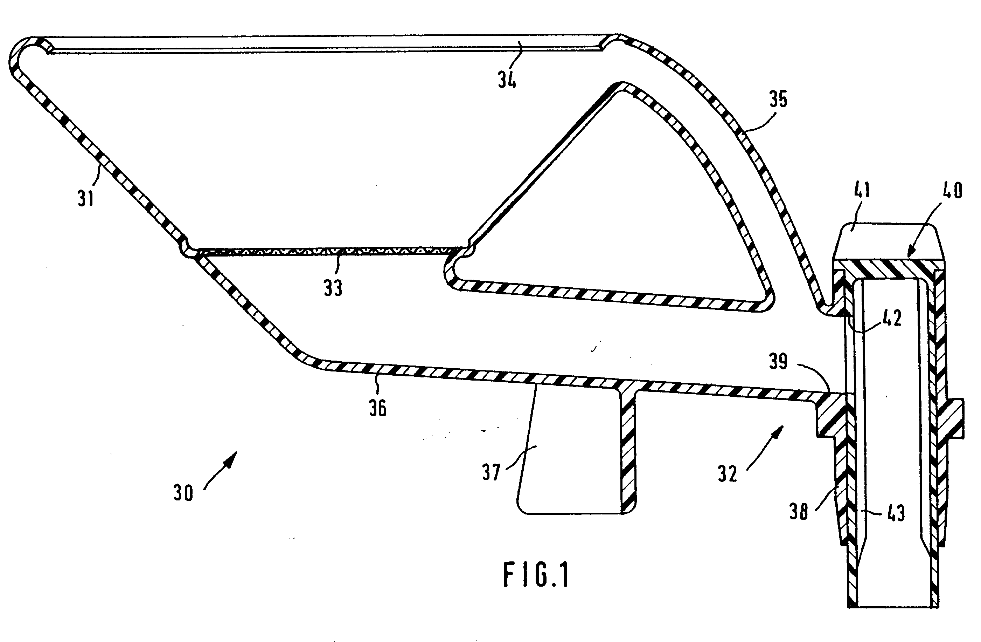

Der verschließbare Einfülltrichter 30 nach Fig. 1 weist eine sich nach unten verjüngende Einfüllschale 31, einen rohrförmigen Auslauf 32, ein Sieb 33 und einen Griff 35 auf. Der obere Rand 34 der Einfüllschale 31 ist nach einwärts oder innen gebogen, um hochschwappende Flüssigkeit wieder ins Innere des Trichters zu leiten. Der Auslauf 32 umfaßt einen schwach geneigten Rohrabschnitt 36, der mit einem Stützfuß 37 versehen ist, und einen Auslaufstutzen 38, der über eine Öffnung 39 mit dem Rohrinneren 36 verbunden ist, sich senkrenkt erstreckt und zur Aufnahme eines Drehschiebers oder Drehhahnes 40 dient. Der Hahn 40 besteht aus einem rohrförmigen, einseitig geschlossenen Hohlkörper mit Griff 41, seitlicher Öffnung 42 und gegebenenfalls Verstärkungsrippen 43. Die Öffnung 42 fluchtet zur Öffnung 39,
wenn der Hahn geöffnet ist, und kann mittels des Griffes 41 weggeschwenkt werden, so daß der Rohrabschnitt 36 abgesperrt wird. Das Innere des Hahns 40 und die Öffnungen 39, 42 sind genügend weit, so daß aus dem Inneren des Behälters verdrängte Luft durch den hohlen Griff 35 und über das obere Ende der Einfüllschale 31 nach außen gelangen kann.

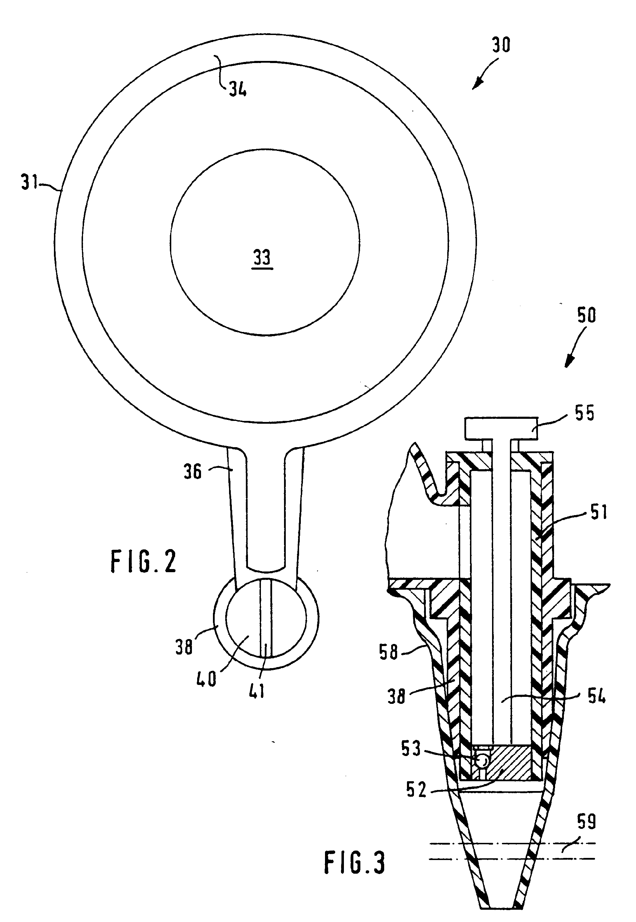

Der Einfülltrichter 30 kann aus Kunststoff geblasen oder spritzgegossen sein. Die Einfüllschale 31 kann, von oben gesehen (Fig. 2), kreisförmig sein, es sind aber auch andere Gestaltungen, z. B. eine elliptisch abgeplattete Ausführungsform möglich, wenn eine solche aus Raumgründen gewünscht wird.

Fig. 3 zeigt die Verschlußeinrichtung 50 eines Einfülltrichters, der wie der Einfülltrichter 30 nach Fig. 1 und 2 gestaltet sein kann. In den Auslaufstutzen 38 ist ein Hohlkörper 51 eingesetzt, der als Führung für einen Schieberkolben 52 dient. Im Schieberkolben 52 ist ein Rückschlagventil 53 angeordnet. Das Rückschlagventil 53 kann eine oder mehrere Kugeln enthalten, die jeweils auf einem kegelförmigen Ventilsitz aufruhen und dort mit Schwerkraft oder Federkraft gehalten werden. Es sind auch andere Konstruktionen möglich, beispielsweise mit Klappen. Das Rückschlagventil 53 ist so gepolt, daß eine Flüssigkeitsströmung nur von unten nach oben durch das Ventil gelangen kann.

Der Schieberkolben 52 ist mit einer Kolbenstange 54 verbunden, die durch eine Bohrung am oberen Ende des Hohlkörpers 51 geführt ist und auf deren oberen Ende ein Griff 55 befestigt ist. Zum Einfüllen von Flüssigkeit wird der Schieberkolben 52 nach oben in Anlage am oberen Ende des Hohlkörpers 51 gezogen, während zum Verschließen des Einfülltrichters der Schieberkolben nach unten wie dargestellt verschoben wird, wobei die verdrängte Flüssigkeit durch das Rückschlagventil 53 vom Bereich unterhalb des Schieberkolbens in den Bereich oberhalb des Schieberkolbens gelangen kann. Der Einfülltrichter 50 kann deshalb an seinem unteren Ende verschlossen werden.

In Fig. 3 ist noch ein sich verjüngendes Aufsteckrohr 58 aus Kunststoff dargestellt, welches in unterschiedlich weite Einstecköffnungen von Behältern paßt. Sofern man einen rascheren Durchlauf wünscht, kann das untere Ende in passender Höhe abgeschnitten werden, wie bei 59 angedeutet.

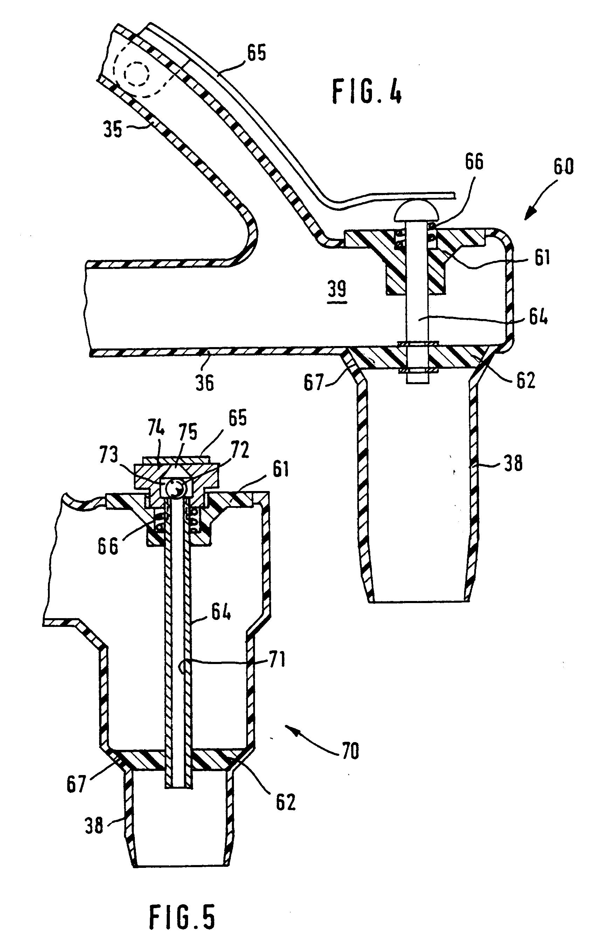

Fig. 4 zeigt eine weitere Ausführungsform einer Verschließeinrichtung 60. Die Verschließeinrichtung 60 weist einen deckelartigen Führungskörper 61, ein kegelstumpfartig ausgebildetes Ventilsitzelement 62, eine Ventilstange 64, einen Betätigungshebel 65 und eine Rückholfeder 66 auf. Der Auslaufstutzen 38 ist an seinem Übergang zum Rohrabschnitt 36 kegelförmig gestaltet, um einen Ventilsitz 67 zu bilden. Der Betätigungshebel 65 ist am Griff 35 angelenkt, so daß man den Hebel 65 nach unten schwenkt, wenn man den Griff faßt. Der nach unten geschwenkte Betätigungshebel 65 führt das Ventil in seine gezeigte Schließstellung. Beim Loslassen des Griffes hebt die Ventilfeder 66 das Ventilelement 62 an, bis es an der Unterseite des Führungskörpers 61 anliegt. Die Öffnung 39 ist genügend weit, einerseits Flüssigkeit nach unten strömen zu lassen und andererseits die entweichende Luft aus dem Behälter vorbeizulassen.

Fig. 5 zeigt eine weitere Verschließeinrichtung 70, welche die Ausführungsform 60 derart abwandelt, daß der Verschluß am unteren Ende des Auslaufstutzens 38 erfolgt. Demgemäß ist der Ventilsitz 67 weiter unten angeordnet. Die Ventilbetätigungsstange 64 ist länger und weist einen axialen Kanal 71 auf, auf dessen oberem Ende eine Kugel 72 aufruht, die in einem Raum 73 frei beweglich ist, der im Inneren einer Mutter 74 geschaffen ist. Die Mutter 74 weist einen Luftauslaßkanal 75 auf, der an seinem unteren Ende als Ventilsitz für die Kugel 72 gestaltet ist. Im übrigen ist die Mutter 74 als Widerlager für die Ventilfeder 66 und als Auflagestelle des unteren Endes des Betätigungshebels 65 gestaltet.

Die Einrichtung 71 bis 75 dient zur Abführung von Luft, sperrt aber austretende Flüssigkeit und stellt einen gewissen Explosionsschutz dar. Dies wird durch den Auftriebseffekt der Kugel 72 bewirkt, aber auch dadurch, daß Flüssigkeit eine wesentlich größere Viskosität als Luft hat, weswegen die Kugel 72 von der Flüssigkeit angehoben wird und gegen den Ventilsitz am Kanal 75 gedrückt wird.

Es ist natürlich auch möglich, statt des beschriebenen Ventils einfach einen Verlängerungsschlauch für den Kanal 71 vorzusehen, der oberhalb des möglichen Flüssigkeitsspiegels in der Schale 31 hinausragt.

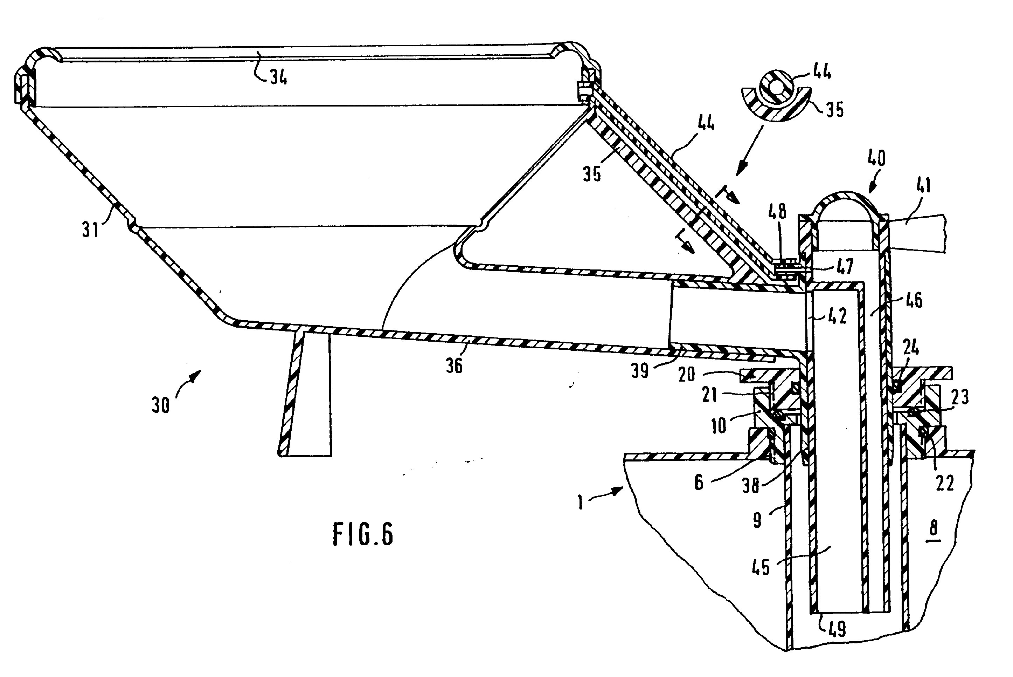

Fig. 6 zeigt eine Ausführungsform des verschließbaren Einfülltrichters 30 ähnlich zur Ausführungsform nach Fig. 1. Für gleichartige Teile werden die gleichen Bezugszeichen verwendet. Es sind jedoch folgende Unterschiede festzustellen:
Der nach einwärts oder innen gebogene Rand 34 der Einfüllschale 31 ist als Aufsteckteil ausgebildet, so daß der Rest der Einfüllschale 31 leichter entformt werden kann. Der Griff 35 ist rinnenförmig nach oben offen ausgebildet, um eine Entlüftungsleitung 44 aus durchsichtigem Kunststoff aufzunehmen.
Der Auslaufstutzen 38 ist als gesondertes Teil gefertigt und besitzt einen Aufsteckkragen 39, mit dem das Teil 38 am Rohrabschnitt 36 befestigt ist. Am Auslaufstutzen 38 ist ferner ein Nippel 48 angeformt, auf den die Leitung 44 gesteckt ist. (Im Bereich der Leitung 44 kann im übrigen eine der Einrichtung 71 bis 75 entsprechende Ölsperr- und Explosionsschutzeinrichtung vorgesehen sein.) Der Drehschieber 40 ist in zwei Hohlräume 45 und 46 aufgeteilt, von denen der Hohlraum 45 bei entsprechender Drehlage des Drehschiebers 40 über die seitliche Öffnung 42 mit dem Inneren des Rohres 36 kommuniziert, während der Raum 46 über eine weitere seitliche Bohrung 47 mit der durchsichtigen Leitung 44 in Verbindung steht.

Am Umfang des Auslaufstutzens 38 ist ferner eine ringförmige Mutter 20 unverlierbar gehalten, um den Einfülltrichter 30 direkt oder indirekt an einem Behälter 1 zu befestigen. Im dargestellten Fall weist der Behälter 1 eine Schrauböffnung 6 auf, in welche ein Schraubkopf 10 eingeschraubt ist, der ein Innengewinde zur Zusammenarbeit mit Außengewinde 21 der Mutter aufweist und sich nach unten hin in einem Verlängerungsrohr 9 fortsetzt. Das Rohr 9 dient zum sanften Einfüllen von Flüssigkeit und ist mit Querbohrungen versehen. Oberhalb der Unterkante 49 des Drehschiebers 40 bildet sich im Behälter 1 eine Luftblase 8, sofern die Luft daran gehindert wird, durch Lücken zwischen den Teilen 1, 10 und 20 auszutreten. Aus diesem Grunde sind Dichtungen 22, 23, 24 vorgesehen, die als O-Ringe ausgebildet sein können und die Lücken zwischen den Teilen 1, 10 und 20 abdichten.

Zum Befüllen des Behälters 1 (Fig. 6) wird vorzugsweise das Einfüllschraubrohr 9, 10 benutzt, in das der Auslaufstutzen 38 eingesteckt wird. Oberhalb der Kante 49 bildet sich im oberen Teil des Behälters 1 eine Lufttasche 8, die das vollständige Füllen des Behälters 1 verhindert. Wenn so viel Flüssigkeit eingefüllt sein sollte, die in die Einfüllschale 31 hcohsteigt, wird der Hahn 40 in seine Sperrstellung gedreht und das Einfüllschraubrohr 9, 10 oder der Mutter 20 ein wenig gelöst. Dabei entweicht Luft aus der Lufttasche 8 durch Spalte ins Freie, und die im Inneren des Drehschiebers 40 befindliche Flüssigkeit gelangt in das Faßinnere.

Es ist auch möglich, das Volumen der Wandteile 38, 40 größer als das von Flüssigkeit eingenommene Innere des Drehschiebers 40 oberhalb der Schrauböffnung 6 zu machen, so daß man auch ohne Luftblase arbeiten kann.

Es ist somit ersichtlich, daß mit dem erfindungsgemäßen Einfülltrichter 30 das überfüllen des Behälters 1 vermieden werden kann.

## Patentansprüche

1. Einfülltrichter zum Einfüllen von Flüssigkeiten in Behälter, insbesondere gefährliche Flüssigkeiten, wie Altöl oder Chemikalien,
mit einer Einfüllschale (31),
mit einem darin angebrachten Sieb (33) und
mit einem exzentrisch zur Achse der Einfüllschale angeordneten Auslauf (32),
gekennzeichnet durch folgende Merkmale:
zwischen dem oberen Rand (34) der Einfüllschale (31) und dem Auslauf (32) erstreckt sich ein Handgriff (35);
der Auslauf (32) umfaßt einen Auslaufstutzen (38) und eine Sperreinrichtung (40, 50, 60, 70) mit einer Öffnungsstellung und einer Schließstellung;
die Sperreinrichtung (40, 50, 60, 70) weist einen Betätigungsgriff (41, 55, 65) auf, der neben der Einfüllschale (31) angeordnet ist, und zwar entweder am oberen Ende des Auslaufstutzens (38), wobei die Sperreinrichtung (40, 50) ihre jeweils eingestellte Stellung beibehält, oder am Handgriff (35) angeordnet ist, wobei die Sperreinrichtung (60, 70) selbsttätig in ihre Öffnungsstellung geht und das Umfassen des Handgriffs (35) mit Betätigungsgriff (65) zur Schließstellung führt.

2. Einfülltrichter nach Anspruch 1, dadurch gekennzeichnet,
daß der Auslaufstutzen (38) über einen Rohrabschnitt (36) mit dem unteren Ende der Einfüllschale (31) und über eine Entlüftungsleitung (35, 44) mit dem oberen Rand der Einfüllschale (31) verbunden ist.

3. Einfülltrichter nach Anspruch 2, dadurch gekennzeichnet,
daß ein oberer Abschnitt (44) der Entlüftungsleitung in den Handgriff (35) einbezogen ist.

4. Einfülltrichter nach Anspruch 3, dadurch gekennzeichnet,
daß die Entlüftungsleitung als Füllstandsanzeiger ausgebildete durchsichtige Abschnitte (44) aufweist.

5. Einfülltrichter nach einem der Ansprüche 1 bis 4, dadurch gekennzeichnet,
daß die Sperreinrichtung als hohler Drehschieber (40) mit seitlicher, zum Sperren wegschwenkbarer Zulauföffnung (42) und axialer Auslauföffnung (bei 49) ausgebildet ist.

6. Einfülltrichter nach Anspruch 5, dadurch gekennzeichnet,
daß in das hohle Innere des Drehschiebers (40) ein unterer Abschnitt (46) der Entlüftungsleitung einbezogen ist, der über eine seitliche, zum Sperren wegschwenkbare Verbindungsöffnung (47) mit dem oberen Abschnitt (44) der Entlüftungsleitung verbunden ist.

7. Einfülltrichter nach einem der Ansprüche 1 bis 4, dadurch gekennzeichnet,
daß die Sperreinrichtung (50) einen Schieberkolben (52) aufweist, der längs des Auslaufstutzens (38) bewegbar ist.

8. Einfülltrichter nach einem der Ansprüche 1 bis 4, dadurch gekennzeichnet,
daß die Sperreinrichtung (60) als Sitzventil ausgebildet ist, das ein bewegliches, mit dem Betätigungsgriff (65) verbundenes Ventilsitzelement (62) und einen am Auslaufstutzen angebrachten Ventilsitz (67) aufweist.

9. Einfülltrichter nach einem der Ansprüche 2 bis 8, dadurch gekennzeichnet,
daß die Entlüftungsleitung ein Ölsperrventil (72) aufweist, das aus zwei im Abstand angeordneten Ventilsitzen (71, 75) und einer Kugel (72) besteht, die von einem möglichen Ölstrom gegen den zweiten Ventilsitz (75) gepreßt werden kann, nicht jedoch von dem Entlüftungsstrom.

10. Einfülltrichter nach einem der Ansprüche 1 bis 9, dadurch gekennzeichnet,
daß am Auslaufstutzen (38) eine Mutter (20) angebracht ist, die dichtend mit der Öffnung des Behälters verbindbar ist.

## Claims

1. Filling funnel for filling liquids into containers, especially dangerous liquids as used oil and chemicals, comprising: a filling-in bowl (31),
a filter (33) arranged therein and
an outlet (32) which is excentric to the axis of the filling-in bowl, characterized by the following features:
a handle (35) extending between the upper edge (34) of the filling-in bowl (31) and the outlet (32);
the outlet (32) including a draining pipe (38) and a shutting means (40, 50, 60, 70) having an open and a closed position;
the shutting means (40, 50, 60, 70) comprising a control grip (41, 55, 65) which is arranged adjacent to the filling-in bowl (31) either at the upper end of the drain pipe (38), when the shutting means (40, 50) stays in the position, which it takes, or is arranged at the handle (35) when the shutting means (60, 70) automatically moves into its open position,
whereas gripping the handle (35) and the control grip (35) lead to the closed position thereof.

2. Funnel according to claim 1,
wherein the draining pipe (38) is connected through a tube section (36) to the lower end of the filling-in bowl (31) and through a venting duct (35, 44) to the upper edge of the filling-in bowl (31).

3. Funnel according to claim 2,
wherein an upper section (44) of the venting duct is included in the handle (35).

4. Funnel according to claim 3,
wherein the venting duct comprises transparent sections (44) adapted as filling level indicator.

5. Funnel according to one of the claims 1 through 4,
wherein the shutting means is a hollow turnable member (40) having a lateral inlet opening (42) which can be moved away for shutting purposes, and an axial outlet opening (at 49).

6. Funnel according to claim 5,
wherein a lower section (46) of the venting duct is included within the hollow interior of the turnable member (40), the lower section being connected to the upper section (44) of the venting duct through a lateral connecting opening (47) which can be moved away for shutting purposes.

7. Funnel according to one of the claims 1 through 4,
wherein the shutting means (50) includes a spool (52) which is movable in the direction of the draining pipe (38).

8. Funnel according to one of the claims 1 through 4,
wherein the shutting means (60) is a poppet valve which comprises a movable poppet element (62) connected to the control grip (65) and a valve seat (67) arranged at the draining pipe.

9. Funnel according to one of the claims 2 through 8,
wherein the venting duct comprises an oil shut-off valve (72) consisting of a pair of valve seats (71, 75) arranged in a distance one from the other, and a ball (72) which may be pressed against the second valve seat (75) by a possible oil flow, yet not by the venting flow.

10. Funnel according to one of the claims 1 through 9,
wherein a nut (20) is arranged at the draining pipe (38) and can be sealingly connected to the neck of the container.

## Revendications

1. Un entonnoir de remplissage pour remplir des récipients de liquides, en particulier de liquides dangereux, comme des huiles usées ou des produits chimiques,
avec un bol de remplissage (31),
pourvu d'un filtre (33) et
d'un orifice d'écoulement (32) décentré par rapport à l'axe du bol de remplissage,
caractérisé par les particularités suivantes:
une poignée (35) relie le bord supérieur (34) du bol de remplissage (31) et l'orifice d'écoulement (32);
l'orifice d'écoulement (32) comprend un manchon d'écoulement (38) et un dispositif d'obturation (40, 50, 60, 70) avec une position d'ouverture et une position de fermeture;
le dispositif d'obturation (40, 50, 60, 70) possède un actionneur (41, 55, 65) qui est placé à côté du bol de remplissage (31), soit au bord supérieur du manchon d'écoulement (38), auquel cas le dispositif d'obturation (40, 50) conserve la position qu'il occupait, soit sur la poignée (35) auquel cas le dispositif d'obturation (60, 70) prend automatiquement la position d'ouverture et la fermeture est provoquée par la saisie de la poignée (35) avec actionneur (65).

2. Un entonnoir de remplissage selon la revendication 1,
caractérisé par le fait que
le manchon d'écoulement (38) est relié par une partie tuyau (36) avec la partie inférieure du bol de remplissage (31) et par un conduit de ventilation (35, 44) avec le bord supérieur du bol de remplissage (31).

3. Un entonnoir de remplissage selon la revendication 2,
caractérisé par le fait que
qu'une partie supérieure (44) du conduit de ventilation est incluse dans la poignée (35).

4. Un entonnoir de remplissage selon la revendication 3,
caractérisé par le fait que
le conduit de ventilation possède des parties transparentes (44) servant d'indicateur de niveau.

5. Un entonnoir de remplissage selon l'une des revendications 1 à 4,
caractérisé par le fait que
le dispositif d'obturation est conçu comme un tiroir rotatif creux (40) avec une ouverture latérale d'entrée (42), qui peut être escamotée par rotation pour la fermeture, et une ouverture axiale de sortie (en 49).

6. Un entonnoir de remplissage selon la revendication 5,
caractérisé par le fait que
la partie creuse de l'intérieur du tiroir rotatif (40) comprend une partie inférieure (46) du conduit de ventilation, partie qui est reliée à la partie supérieure (44)) du conduit de ventilation par une ouverture latérale de raccordement (47) qui peut être escamotée par rotation pour la fermeture.

7. Un entonnoir de remplissage selon l'une des revendications 1 à 4,
caractérisé par le fait que
le dispositif d'obturation (50) comporte un piston à tiroir (52) qui peut être déplacé le long du manchon d'écoulement (38).

8. Un entonnoir de remplissage selon l'une des revendications 1 à 4,
caractérisé par le fait que
le dispositif d'obturation (60) est conçu comme une soupape à siège qui possède un obturateur mobile (62) relié à l'actionneur (65) et un siège de soupape (67) inclus dans le manchon d'écoulement.

9. Un entonnoir de remplissage selon l'une des revendications 2 à 8,
caractérisé par le fait que
le conduit de ventilation possède une soupape d'arrêt d'huile (72) qui est composée de deux sièges de soupape (71, 75), placés à une certaine distance l'un de l'autre, et d'une bille (72) qui peut être repoussée contre le deuxième siège de soupape (75) par un éventuel flux d'huile, mais non par le flux de ventilation.

10. Un entonnoir de remplissage selon l'une des revendications 1 à 9,
caractérisé par le fait que
le manchon d'écoulement (38) possède un écrou (20) qui peut être raccordé de manière étanche à l'orifice du récipient.
